(19) Europäisches Patentamt
European Patent Office
Office européen des brevets

(11) **EP 3 608 713 B1**

(12) **EUROPEAN PATENT SPECIFICATION**

(45) Date of publication and mention
of the grant of the patent:
**11.05.2022 Bulletin 2022/19**

(21) Application number: **18775101.1**

(22) Date of filing: **26.03.2018**

(51) International Patent Classification (IPC):
**G02F 2/02** (2006.01)          **G02F 1/37** (2006.01)
**H01S 3/137** (2006.01)          **G02F 1/35** (2006.01)

(52) Cooperative Patent Classification (CPC):
**G02F 1/35; G02F 1/37; G02F 2/02; H01S 3/137;**
G02F 2203/56

(86) International application number:
**PCT/JP2018/012205**

(87) International publication number:
**WO 2018/181213 (04.10.2018 Gazette 2018/40)**

(54) **OPTICAL FREQUENCY COMB GENERATION DEVICE**

VORRICHTUNG ZUR ERZEUGUNG EINES OPTISCHEN FREQUENZKAMMS

DISPOSITIF DE GÉNÉRATION DE PEIGNE DE FRÉQUENCES OPTIQUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2017 JP 2017064316**

(43) Date of publication of application:
**12.02.2020 Bulletin 2020/07**

(73) Proprietor: **National Institute of Advanced
Industrial Science
and Technology
Tokyo 100-8921 (JP)**

(72) Inventors:
• **OKUBO, Sho**
  **Tsukuba-shi**
  **Ibaraki 3058560 (JP)**
• **INABA, Hajime**
  **Tsukuba-shi**
  **Ibaraki 3058560 (JP)**
• **ONAE, Atsushi**
  **Tsukuba-shi**
  **Ibaraki 3058560 (JP)**

(74) Representative: **Grünecker Patent- und
Rechtsanwälte
PartG mbB
Leopoldstraße 4
80802 München (DE)**

(56) References cited:
JP-A- 2007 256 365          JP-A- 2007 256 365
JP-A- 2014 013 935          JP-A- 2014 013 935
JP-A- 2014 135 341          JP-A- 2014 135 341
US-A1- 2009 097 035          US-A1- 2012 093 181
US-A1- 2012 093 181

• SHO OKUBO ET AL: "Novel phase-locking
schemes for the carrier envelope offset
frequency of an optical frequency comb",
APPLIED PHYSICS EXPRESS, vol. 8, no. 11, 15
October 2015 (2015-10-15), page 112402,
XP055550815, JP ISSN: 1882-0778, DOI:
10.7567/APEX.8.112402
• STEFAN RAUSCH ET AL: "Few-cycle oscillator
pulse train with constant carrier-envelope- phase
and 65 as jitter", OPTICS EXPRESS, vol. 17, no.
22, 26 October 2009 (2009-10-26), pages
20282-2129, XP055550818, US ISSN: 1094-4087,
DOI: 10.1364/OE.17.020282
• GÜNTHER KRAUSS ET AL: "All-passive phase
locking of a compact Er:fiber laser system",
OPTICS LETTERS, OPTICAL SOCIETY OF
AMERICA, US, vol. 36, no. 4, 15 February 2011
(2011-02-15), pages 540-542, XP001560249, ISSN:
0146-9592, DOI: 10.1364/OL.36.000540 [retrieved
on 2011-02-10]

- OKUBO, SHO et al.: "Novel phase-locking schemes for the carrier envelope offset frequency of an optical frequency comb", Applied Physics Express, vol. 8, 15 October 2015 (2015-10-15), page 112402, XP055550815,
- RAUSCH, STEFAN et al.: "Few-cycle oscillator pulse train with constant carrier-envelope-phase and 65 as jitter", Optics Express, vol. 17, no. 22, 26 October 2009 (2009-10-26), pages 20282-20290, XP055550818,
- OKUBO SHO et al.: "Offset-free optical frequency comb self-referencing with an f-2f interferometer", Optica, vol. 5, no. 2, 8 February 2018 (2018-02-08), pages 188-192, XP055550823,

**Description**

FIELD

The present invention relates to an optical frequency comb generation device, and more particularly to an optical frequency comb generation device that generates an optical frequency comb with an offset frequency $f_{ceo}$ set to zero.

BACKGROUND

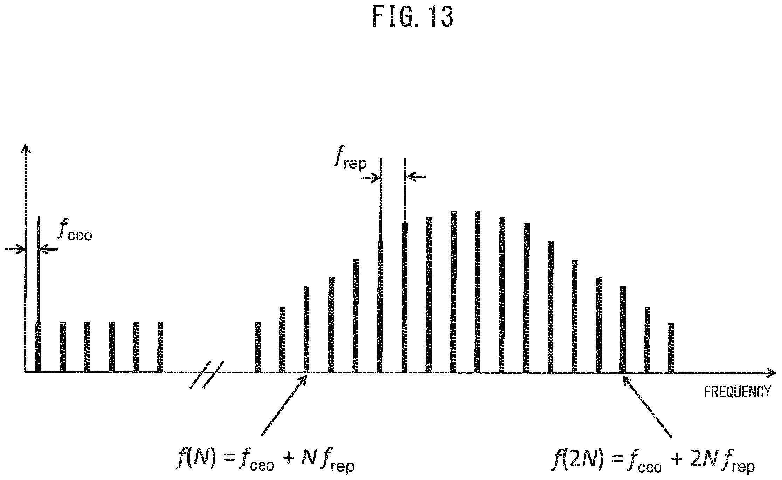

As illustrated in Fig. 13, when an optical frequency comb, which is a pulse laser beam represented by an aggregate of multiple spectral lines and in which multiple frequency spectra each having a narrow bandwidth are arranged in a comb-like fashion at a frequency spacing of a given repetition frequency $f_{rep}$, spans a bandwidth of one octave or wider, a frequency spectrum 1300 of the optical frequency comb contains both a component having a long wavelength (lower frequency f (N)) and a component having a short wavelength (higher frequency f (2N)). Since the component having the long wavelength (lower frequency f (N)) and the component having the short wavelength (higher frequency f (2N)) have an offset defined by an offset frequency $f_{ceo}$, frequencies of the respective components are expressed by the following equations:

$$F (N) = N \times f_{rep} + f_{ceo} \quad (1)$$

$$F (2N) = 2N \times f_{rep} + f_{ceo} \quad (2)$$

Note that, in the equations above, N is zero or a natural number and represents an order of a mode. The offset frequency $f_{ceo}$ is officially referred to as a carrier envelope offset frequency (in this description, it is abbreviated to as an "offset frequency" for the sake of convenience). In addition, the next inequality holds between the offset frequency $f_{ceo}$ and the repetition frequency $f_{rep}$.

$$0 \leq f_{ceo} \leq f_{rep} \quad (3)$$

Controlling the offset frequency $f_{ceo}$ of this optical frequency comb is an important and fundamental technique not only in precise frequency metrology and ultrafast physics but also in chemistry and astronomy. In particular, an optical frequency comb controlled to have $f_{ceo} = 0$ is useful in many fields including optical frequency division or application of an attosecond light pulse for controlling carrier-envelope phases. The offset frequency $f_{ceo}$ of the optical frequency comb is detected as a beat signal between second harmonics (frequencies 2f (N)) of the long wavelength component and the component having short wavelength (higher frequency f (2N)) in an interference signal obtained by causing interference between light containing the second harmonics (frequencies 2f (N)) and light having the short wavelengths (higher frequencies f (2N)) by an f-2f interferometer. The f-2f interferometer performs, in order to obtain a stable offset frequency $f_{ceo}$, phase discrimination between the offset frequency $f_{ceo}$ of the optical frequency comb and a reference microwave signal, and phase locking is typically performed so as to keep a phase difference between the offset frequency $f_{ceo}$ of the optical frequency comb and the reference microwave signal constant. However, since zero frequency (direct current) doesn't have a phase, phase discrimination cannot be performed on the frequency; therefore, the offset frequency $f_{ceo}$ cannot be stably kept to zero as it is.

In view of this problem, optical frequency comb generation devices that generate an optical frequency comb with the offset frequency $f_{ceo}$ set to zero have been proposed (see, for example, NPLs 1 and 2 and PTL 1). NPL 1 discloses a device that generate an optical frequency comb with the offset frequency $f_{ceo}$ set to zero. The device detects, from an optical frequency comb whose frequency has been shifted by a modulation frequency $f_{AOM}$ by an acousto-optical modulator (AOM), a frequency ($f_{ceo} + f_{AOM}$) using an f-2f interferometer, and phase-locks the signal having the shifted frequency to the frequency $f_{AOM}$; consequently, the device sets the offset frequency $f_{ceo}$ to zero in accordance with the following equation:

$$f_{ceo} + f_{AOM} = f_{AOM} \quad (4)$$

In addition, NPL 2 and PTL 1 disclose a device that supplies a lower frequency component (frequency: $f_{ceo} +$

n1 $f_{rep}$) and a higher frequency component (frequency: $f_{ceo}$ + n2$f_{rep}$) contained in an optical frequency comb having an enhanced bandwidth to a difference frequency generator (DFG) employing a non-linear optical crystal and that causes the DFG to generate a difference frequency component (frequency: (n2 - n1)$f_{rep}$) from those components and to output an optical frequency comb with the offset frequency $f_{ceo}$ set to zero.

[CITATION LIST]

[NON PATENT LITERATURE]

[NPL 1] Rausch, et al., Opt.Express. 17, 20282, (2009)
[NPL 2] Paper, Krauss, et al., Opt.Lett. 36, 540, (2011)

[PATENT LITERATURE]

[PTL 1] US Patent Application Publication No. 20120093181
Sho Okubo ET AL. discloses in Applied Physics Express, vol. 8, no. 11, 15 October 2015 (2015-10-15), page 112402, "Novel phase-locking schemes for the carrier envelope offset frequency of an optical frequency comb" (http://dx.doi.org/10.7567/APEX.8.112402). US 2009/097035 A1 discloses a method and an apparatus for optical frequency measurement, using one or two frequency-stabilized mode-locked laser combs operating at different repetition rates to mix with a laser under measurement (LUM) respectively so as to generate two beat frequencies. JP 2014 013935 A discloses a measuring device which measures the carrier envelope offset frequency of a mode-locked laser. JP 2014 135341 A discloses an optical frequency comb having a stable offset optical frequency by improving the detection sensitivity of a CEO beat signal. JP 2007 256365 A discloses an optical frequency comb generation device for obtaining an optical comb of high S/N ratio.

SUMMARY

The present invention provides an optical frequency comb generation device as claimed in claim 1. Preferred embodiments are claimed in the dependent claims.

[TECHNICAL PROBLEM]

However, in a conventional optical frequency comb generation device employing an AOM, an expensive AOM is required, which makes the configuration of the entire device expensive; in addition, the device has a problem in that a S/N ratio of a signal used for control decreases due to zeroth-order light mixed into the signal or the like. In contrast, in a conventional optical frequency comb generation device employing a DFG, an optical frequency comb with an offset frequency $f_{ceo}$ set to zero, which is obtained from the DFG, has a narrow bandwidth. Therefore, the device has a problem in that another bandwidth enhancement process (hereinafter, simply abbreviated to as "bandwidth re-enhancement") is required on the obtained optical frequency comb.
The present invention has been accomplished in view of the problems described above, and an object of the present invention is to provide an optical frequency comb generation device that generates an optical frequency comb with an offset frequency $f_{ceo}$ set to zero by means of a configuration that is simple and does not require bandwidth re-enhancement.

[SOLUTION TO PROBLEM]

To achieve the object described above, the optical frequency comb generation device according to the present invention includes: an optical frequency comb generator that generates an optical frequency comb, which is a pulse laser beam represented by an aggregate of multiple spectral lines whose frequencies have an offset defined by an offset frequency $f_{ceo}$ and that are arranged at a frequency spacing of a given repetition frequency $f_{rep}$ in a comb-like fashion; a detection unit that generates a detection signal indicating the offset frequency $f_{ceo}$ from the optical frequency comb output from the optical frequency comb generator to output the detection signal; and an error signal detection unit that generates, from the detection signal, an error signal for phase-locking a component having a frequency ($f_{rep}$ - $f_{ceo}$) to a component having a frequency ($f_{rep}$ + $f_{ceo}$) and that feeds back the error signal to the optical frequency comb generator to variably control the offset frequency $f_{ceo}$ contained in the optical frequency comb output from the optical frequency comb generator to zero.

[ADVANTAGEOUS EFFECTS OF INVENTION]

The optical frequency comb generation device according to the present invention can generate an optical frequency comb with the offset frequency $f_{ceo}$ set to zero by means of a configuration that is simple and does not require bandwidth re-enhancement.

BRIEF DESCRIPTION OF DRAWINGS

[FIG. 1] FIG. 1 is a block diagram of one embodiment of an optical frequency comb generation device according to the present invention.
[FIG. 2] FIG. 2 is a block diagram of one embodiment of an $f_{ceo}$ detection unit in FIG. 1.
[FIG. 3] FIG. 3 is a block diagram of one embodiment of an error signal generation unit in FIG. 1.
[FIG. 4A] FIG. 4A is a chart illustrating a frequency spectrum of a signal output from a differential amplifier.
[FIG. 4B] FIG. 4B is a chart illustrating a frequency spectrum of a signal output from a bandpass filter.
[FIG. 4C] FIG. 4C is a chart illustrating a waveform of an error signal generated by an adder.
[FIG. 5] FIG. 5 is a frequency spectrum chart for explaining the operation principle of the present embodiment;
[FIG. 6] FIG. 6 is a block diagram of a first variation of the offset frequency $f_{ceo}$ detection unit.
[FIG. 7] FIG. 7 is a block diagram of a second variation of the offset frequency $f_{ceo}$ detection unit.
[FIG. 8A] FIG. 8A is a frequency spectrum chart of an output signal from a BPF in the error signal detection unit included in the optical frequency comb generation device in FIG. 1.
[FIG. 8B] FIG. 8B is a chart illustrating a measurement result of the relative Allan deviation of $f_{ceo}/f_{rep}$.
[FIG. 9] FIG. 9 is a block diagram of an application example of the optical frequency comb generation device according to the present invention.
[FIG. 10] FIG. 10 is a block diagram of one embodiment of an $f_{beat}$ detection unit in FIG. 9.
[FIG. 11] FIG. 11 is a chart illustrating a frequency spectrum of optical signals f (N) output from the optical comb and a laser oscillation frequency $f_{cw}$.
[FIG. 12] FIG. 12 is a diagram illustrating a device configuration of the optical frequency comb generation device according to the present invention for confirming that the optical frequency comb generation device has an offset frequency $f_{ceo}$ = 0, frequency spectra of optical signals from optical combs, a measured out-of-loop beat frequency, and the relative Allan deviation at an optical frequency of 200THz.
[FIG. 13] FIG. 13 is a frequency spectrum chart of one example of a frequency comb output from the optical comb.

DESCRIPTION OF EMBODIMENTS

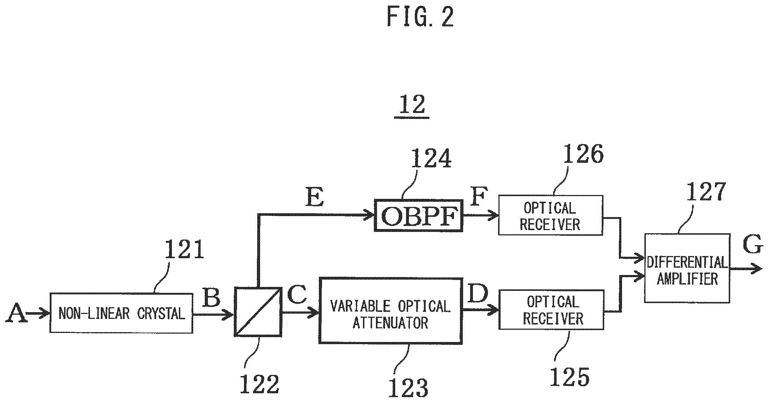

Next, embodiments according to the present invention will be described with reference to the drawings.

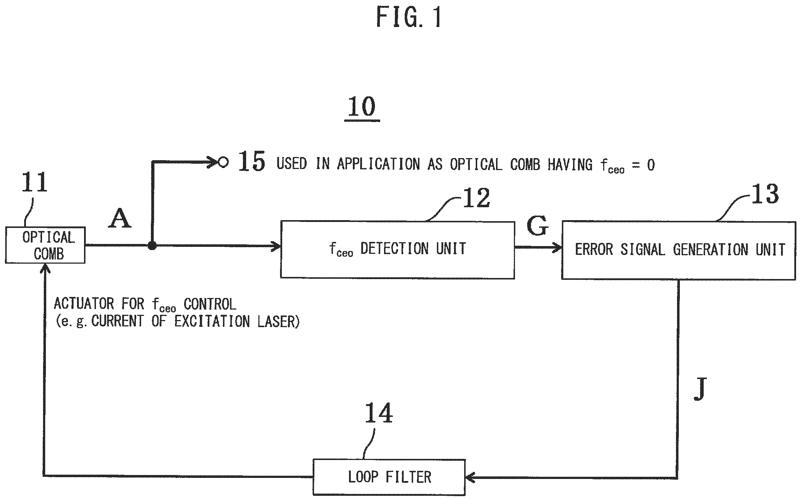

FIG. 1 is a block diagram of one embodiment of an optical frequency comb generation device according to the present invention. As illustrated in FIG. 1, an optical frequency comb generation device 10 of the present embodiment includes a feedback loop configuration that includes an optical frequency comb generator (hereinafter, simply abbreviated to as an "optical comb") 11, an offset frequency $f_{ceo}$ detection unit 12, an error signal generation unit 13, and a loop filter 14. The optical frequency comb generation device 10 outputs, from the optical comb 11, an optical frequency comb, which is a pulse laser beam obtained after control in such a way that an offset frequency $f_{ceo}$ is set to zero.
In the following description, a frequency of a component included in the optical frequency comb and a frequency contained in a signal obtained by performing a certain process on the optical frequency comb may be referred to as an optical frequency.
The optical comb 11 generates an optical frequency comb A, which is a pulse laser beam that contains a component having long wavelength f (N) and a component having short wavelength f (2N) among a frequency spectrum which is represented by an aggregate of spectral lines illustrated in FIG. 13 described above. The offset frequency $f_{ceo}$ detection unit 12 substantially attenuates a power of a component having a repetition frequency $f_{rep}$ that represents a frequency spacing between spectral lines adjacent to each other of the supplied optical frequency comb A using a differential amplifier, and outputs a detection signal indicating a detected offset frequency $f_{ceo}$ and the like. The error signal generation unit 13 generates, from the detection signal supplied from the offset frequency $f_{ceo}$ detection unit 12, an error signal for phase-locking a component having a difference frequency ($f_{rep}$ - $f_{ceo}$) between the repetition frequency of the optical comb 11 and the offset frequency of the optical comb 11 to a component having a sum frequency ($f_{rep}$ + $f_{ceo}$) between the repetition frequency and the offset frequency, and supplies the generated error signal to the optical comb 11 through the loop filter 14.
Next, configurations of respective blocks in FIG. 1 will be described in more detail. FIG. 2 is a block diagram of one embodiment of the offset frequency $f_{ceo}$ detection unit 12 in FIG. 1. In FIG. 2, the offset frequency $f_{ceo}$ detection unit 12 includes a non-linear crystal 121, a beam splitter 122, a variable optical attenuator 123, an optical bandpass filter (OBPF) 124, optical receivers 125 and 126, and a differential amplifier 127. The non-linear crystal 121 includes, for example, a PPLN (periodically poled lithium niobate). The optical frequency comb A that has the frequency spectrum illustrated in FIG. 13 and that contains a frequency component having long wavelength f (N) and a frequency component having short wavelength f (2N) is supplied to the non-linear crystal 121. The non-linear crystal 121 generates second harmonics (frequencies 2f (N)) of the frequency component having the long wavelength f (N), and outputs an interference signal that contains a component having frequency (2f (N) - f (2N) = $f_{ceo}$) generated in an f-2f interference process.

The beam splitter 122 splits an optical signal B (composed of components having optical frequencies 2f (N), f (N), and f (2N)) supplied from the non-linear crystal 121 into an optical signal C and an optical signal E. One of the generated optical signals, which is the optical signal C, is supplied from the beam splitter 122 to the variable optical attenuator 123 while the other optical signal E is supplied from the beam splitter 122 to the OBPF 124. The OBPF 124 extracts, from the input optical signal E, an optical signal F in an optical frequency band in which the second harmonics having the frequencies 2f (N) and the component having the short wavelength (frequency f (2N)) coexist, and supplies the optical signal F to the optical receiver 126. The optical receiver 126 is, for example, a photodiode, performs photoelectric conversion on the input optical signal F, and supplies, to the differential amplifier 127, a first signal composed of a component corresponding to the offset frequency $f_{ceo}$ represented by the interference signal obtained from interference between the component having the second harmonics (frequency 2f (N)) and the component having the short wavelength (frequency f (2N)), components having frequencies $f_{rep}$, $2f_{rep\,o}$, $3f_{rep}$, ... that are m times (m is a natural number of one or greater) the repetition frequency $f_{rep}$, components having difference frequencies ($f_{rep}$ - $f_{ceo}$, $2f_{rep}$ - $f_{ceo}$, $3f_{rep}$ - $f_{ceo}$,...) between the frequencies $f_{rep}$, $2f_{rep}$, $3f_{rep}$, ... and the offset frequency $f_{ceo}$, and components having sum frequencies ($f_{rep}$ + $f_{ceo}$, $2f_{rep}$ + $f_{ceo}$, $3f_{rep}$ + $f_{ceo}$,...) between the frequencies $f_{rep}$, $2f_{rep}$, $3f_{rep}$, ... and the offset frequency $f_{ceo}$.

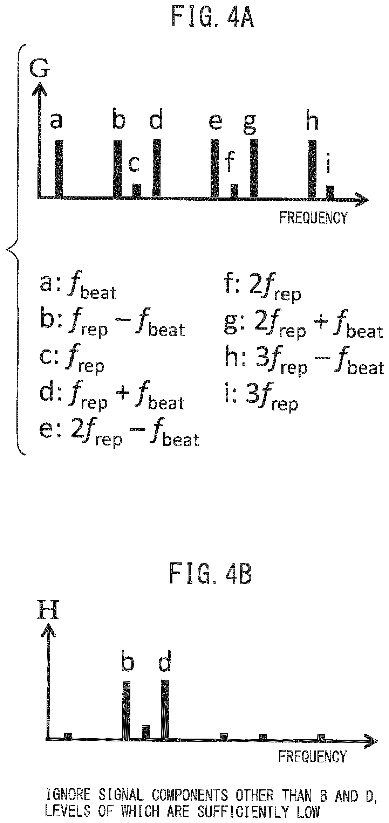

In contrast, the optical receiver 125 is, for example, a photodiode, performs photoelectric conversion on the input optical signal D, and supplies, to the differential amplifier 127, a second signal containing the components having the frequencies $f_{rep}$, $2f_{rep\,o}$, $3f_{rep}$,... that are m times (m is a natural number of one or greater) the repetition frequency $f_{rep}$. Note that, since the optical signal D does not pass the OBPF, a power of the signal having a repetition frequency $f_{rep}$ are far higher than powers of signals associated with the offset frequency $f_{ceo}$ (signals having frequencies expressed using the offset frequency $f_{ceo}$, i.e., signals having frequencies such as $f_{ceo}$, ($f_{rep}$ - $f_{ceo}$), ($2f_{rep}$ - $f_{ceo}$), ($3f_{rep}$ - $f_{ceo}$), ..., ($f_{rep}$ + $f_{ceo}$), ($2f_{rep}$ + $f_{ceo}$), ($3f_{rep}$ + $f_{ceo}$)). Therefore, the offset frequency $f_{ceo}$ detection unit 12 according to the present embodiment is configured in such a way that the power of the second signal is adjusted by the variable optical attenuator 123 and that the signals having the frequencies $f_{rep}$, $2f_{rep\,o}$, $3f_{rep}$,... that are m times the repetition frequency contained in the first signal and the second signal largely cancel out each other in the differential amplifier 127. With this operation, the differential amplifier 127 outputs a signal G, which has the frequency spectrum illustrated in FIG. 4A. Note that the signal G is an example of the detection signal; in the signal G illustrated in FIG. 4A, a signal component a is a signal having the offset frequency $f_{ceo}$; a signal component b is a signal having a frequency ($f_{rep}$ - $f_{ceo}$); a signal component c is a signal having the repetition frequency $f_{rep}$ that has been largely canceled out; a signal component d is a signal having a frequency ($f_{rep}$ + $f_{ceo}$); a signal component e is a signal having a frequency ($2f_{rep}$ - $f_{ceo}$); a signal component f is a signal having the repetition frequency $2f_{rep}$ that has been largely canceled out; a signal component g is a signal having a frequency ($2f_{rep}$ + $f_{ceo}$); a signal component h is a signal having a frequency ($3f_{rep}$ - $f_{ceo}$); and a signal component h is a signal having the repetition frequency $3f_{rep}$ that has been largely canceled out.

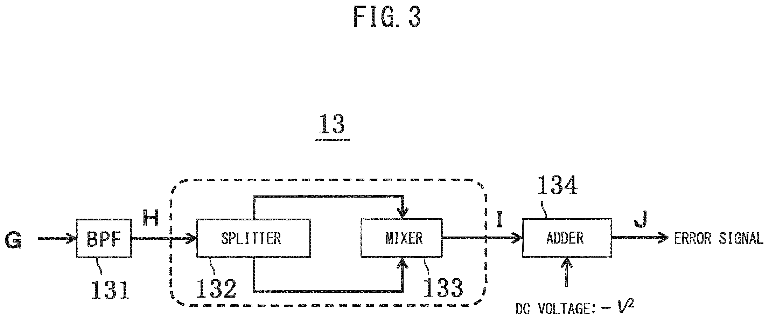

Next, a configuration and an operation of the error signal generation unit 13 in FIG. 1 will be described. FIG. 3 is a block diagram of one embodiment of the error signal generation unit 13 in FIG. 1. In FIG. 3, the error signal generation unit 13 includes a bandpass filter (BPF) 131, a splitter 132, a mixer 133, and an adder 134. The BPF 131 selects a frequency band that contains a frequency range ($f_{rep}$ - $f_{ceo}$) in the electric signal G output from the differential amplifier 127 in the offset frequency $f_{ceo}$ detection unit 12 to ($f_{rep}$ + $f_{ceo}$) and has a wider width than the frequency range, and outputs a signal containing the selected frequency band. Therefore, the BPF 131 selects and outputs the signal components b, c, and d of the signal G, which has the frequency spectrum illustrated in FIG. 4A, substantially suppresses other signal components, and outputs a signal H, which has a frequency spectrum illustrated in FIG. 4B.

The splitter 132 splits the input signal H into two and supplies each of them to the mixer 133. The mixer 133 generates a squared signal of the input signal H by multiplying the supplied signals to each other, and outputs the squared signal. Levels of signal components other than the signal components b and d of the input signal H are sufficiently low as illustrated in FIG. 4B and negligible; the mixer 133 therefore outputs a squared signal I obtained from the signal component b having the frequency ($f_{rep}$ - $f_{ceo}$) and the signal component d having the frequency ($f_{rep}$ + $f_{ceo}$) and expressed by the following equation.

$$I = \{V\cos[2\pi(f_{rep} - f_{ceo})t] + V\cos[2\pi(f_{rep} + f_{ceo})t + \Delta\varphi]\}^2 \quad (5)$$

where $\Delta_\varphi$ represents a phase difference between the aforementioned signal components b and d.

The adder 134 adds a predetermined DC voltage ($-V^2$) to the squared signal I supplied from the mixer 133 to generate a signal J obtained after addition, and outputs the signal J as a feedback error signal to the optical comb 11 through the loop filter 14 in FIG. 1. The error signal J is a base for an error signal for a phase error between the component having the frequency ($f_{rep} - f_{ceo}$) and the component having the frequency ($f_{rep} + f_{ceo}$). While an amplitude and positive/negative polarity of the error signal J vary depending on a phase difference generated by difference of lengths of two electric paths between the splitter 132 and the mixer 133, by selecting appropriate electric path lengths (which will be the same electric path length in many cases), the maximum amplitude and the desired polarity will be obtained. A current of, for example, an excitation laser inside the optical comb 11 is controlled by the error signal J, which causes the offset frequency $f_{ceo}$ of the output optical frequency comb to be variably controlled in such a way that the frequency ($f_{rep} - f_{ceo}$) of the signal component b and the frequency ($f_{rep} + f_{ceo}$) of the signal component d in the equation (5) get closer to each other. Furthermore, by phase-locking the signal component b to the signal component d, ($f_{rep} - f_{ceo}$) = ($f_{rep} + f_{ceo}$) will hold. As a result, the squared signal I in the equation (5) will be as expressed by the following equation.

$$I = V^2 + V^2 \cos\Delta\varphi + (\text{higher frequency components unrelated to phase locking}) \quad (6)$$

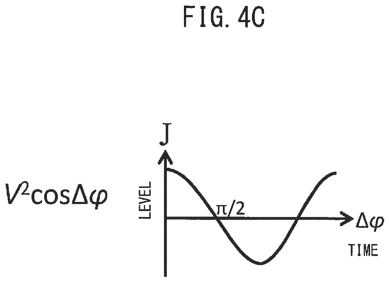

After the higher frequency components unrelated to phase locking in the equation (6) are cut off from the squared signal I by means of a low-pass filter not illustrated, the adder 134 adds the aforementioned predetermined DC voltage ($-V^2$) to the squared signal I after cutoff to generate the error signal J having a waveform expressed as $V^2\cos\Delta\varphi$ illustrated in FIG. 4C. In this manner, by controlling the offset frequency $f_{ceo}$ in such a way that ($f_{rep} - f_{ceo}$) = ($f_{rep} + f_{ceo}$) holds and phase-locking the signal component b to the signal component d, the optical comb 11 generates an optical frequency comb with the offset frequency $f_{ceo}$ controlled to zero and outputs the optical frequency comb to the output terminal 15 in FIG. 1.

According to the present embodiment, a function to be required newly in the optical frequency comb generation device is a simple differential detection function and there is no need to add a complicated function to the optical frequency comb generation device. Therefore, the optical frequency comb generation device can have a simple configuration that does not limit the wavelength band of the optical frequency comb. In addition, according to this method, the offset frequency $f_{ceo}$ of light that emitted from a light source unit of the optical comb 11 and on which the bandwidth enhancement process has not been performed will be set to zero. Therefore, the optical frequency comb generation device may use the light that emitted from the light source unit of the optical comb 11 and on which the bandwidth enhancement process has not been performed by carrying out bandwidth enhancement to the light just once. Furthermore, the optical frequency comb generation device may use an optical frequency comb that is generated in order to detect the offset frequency $f_{ceo}$ and that has a sufficiently wide range without any change.

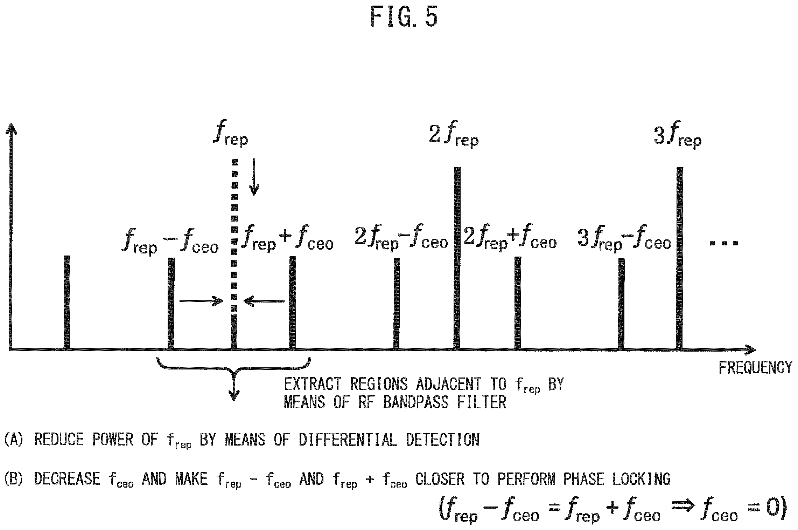

The operation principle of the present embodiment will be described in more detail by means of FIG. 5. In the present embodiment, as illustrated in FIG. 5 as (A), the variable attenuator 123 and the differential amplifier 127 in FIG. 2 first reduce the power of the component having the repetition frequency $f_{rep}$ of the optical frequency comb having a frequency spectrum illustrated in FIG. 5 relatively lower than the powers of the component having the frequency ($f_{rep} - f_{ceo}$) and the component having the frequency ($f_{rep} + f_{ceo}$). Subsequently, as described in (B) of FIG. 5, the feedback loop in FIG. 1 described above including the offset frequency $f_{ceo}$ detection unit 12, the error signal generation unit 13, the loop filter 14, and the optical comb 11 variably controls the offset frequency $f_{ceo}$ to make the frequency ($f_{rep} - f_{ceo}$) and the frequency ($f_{rep} + f_{ceo}$) closer to each other and to phase-lock the signal component b to the signal component d. As a result, the frequency ($f_{rep} - f_{ceo}$) and the frequency ($f_{rep} + f_{ceo}$) are locked and the following relation holds.

$$(f_{rep} - f_{ceo}) = (f_{rep} + f_{ceo}) \quad (7)$$

Therefore, the offset frequency $f_{ceo}$ becomes zero.

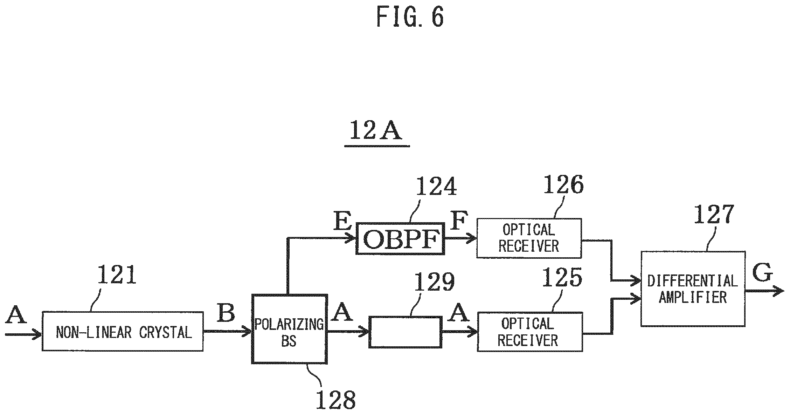

Next, a variation of the offset frequency $f_{ceo}$ detection unit 12 will be described. FIG. 6 is a block diagram of a first variation of the offset frequency $f_{ceo}$ detection unit 12. In FIG. 6, the same reference signs denote the same components as those in FIG. 2, and a corresponding description will be omitted. In FIG. 6, an offset frequency $f_{ceo}$ detection unit 12A according to the first variation includes a polarizing beam splitter 128 instead of the beam splitter 122 and a variable optical attenuator or polarizer 129 instead of the variable optical attenuator 123. In this variation, second harmonics (frequencies 2f (N)) of the optical signal B (composed of the components having the optical frequencies 2f (N), f (N), and f (2N)) obtained by means of the non-linear crystal 121 have the same polarization direction; therefore, the polarizing beam splitter 128 splits the optical signal B into two. Then, an optical frequency comb A (i.e., optical signals composed of fundamental wave components) containing the components having the optical frequencies f (N) and f (2N) is output to one optical path while the optical signal E (i.e., the same signal as the optical signal B) composed of fundamental wave components and second harmonics is output to the other optical path.

Polarization of light split by the polarizing beam splitter 128 is linear polarization. Therefore, when a polarizer is used as the variable optical attenuator or polarizer 129, similarly to a case where the variable optical attenuator is used, the offset frequency $f_{ceo}$ detection unit 12A can adjust the powers of the signal components to be detected and having the frequencies $f_{rep}$, $2f_{rep\,o}$, $3f_{rep}$,... that are m times (m is a natural number of one or greater) the repetition frequency $f_{rep}$ by rotating an transmission axis of the polarizer. The optical receiver 125 supplies the second signal composed of the signal components having the frequencies $f_{rep}$, $2f_{rep\,o}$, $3f_{rep}$,... that are m times the repetition frequency $f_{rep}$ to the differential amplifier 127.

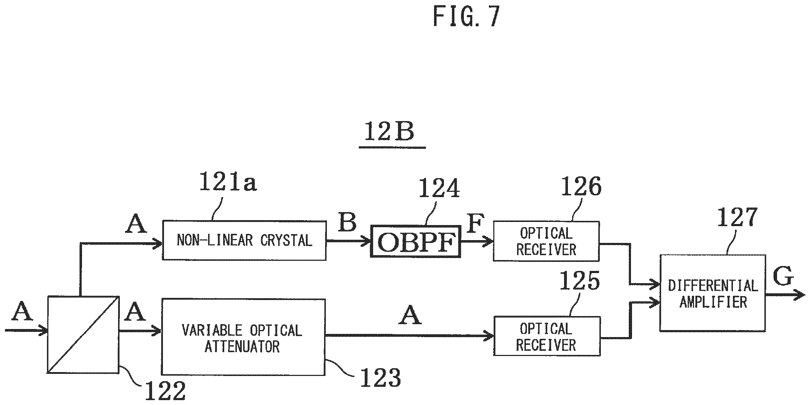

FIG. 7 is a block diagram of a second variation of the offset frequency $f_{ceo}$ detection unit 12. In FIG. 7, the same reference signs denote the same components as those in FIG. 2, and a corresponding description will be omitted. In FIG. 7, an offset frequency $f_{ceo}$ detection unit 12B according to the second variation splits the optical frequency comb A from the optical comb 11 into two by using the beam splitter 122 and supplies the split optical frequency comb A to a non-linear crystal 121a and the variable optical attenuator 123. The non-linear crystal 121a generates, on the basis of the optical frequency comb A supplied from the beam splitter 122, second harmonics (frequencies 2f (N)) of the frequency component having the long wavelength f (N), and outputs the second harmonics (frequencies 2f (N)) together with components having input frequencies f (N) and f (2N). In other words, the optical signal B output from the non-linear crystal 121a contains second harmonics (frequencies 2f (N)) as well as the components having input frequencies f (N) and f (2N). Note that the non-linear crustal 121a includes, for example, a PPLN, similarly to the non-linear crystal 121. The OBPF 124 extracts, from the optical signal B supplied from the non-linear crystal 121a, the optical signal F in the optical frequency band in which both the second harmonics having the frequencies 2f (N) and the frequency component having the short wavelength (frequency f (2N)), both contained in the optical signal B, are contained, and supplies the optical signal F to the optical receiver 126.

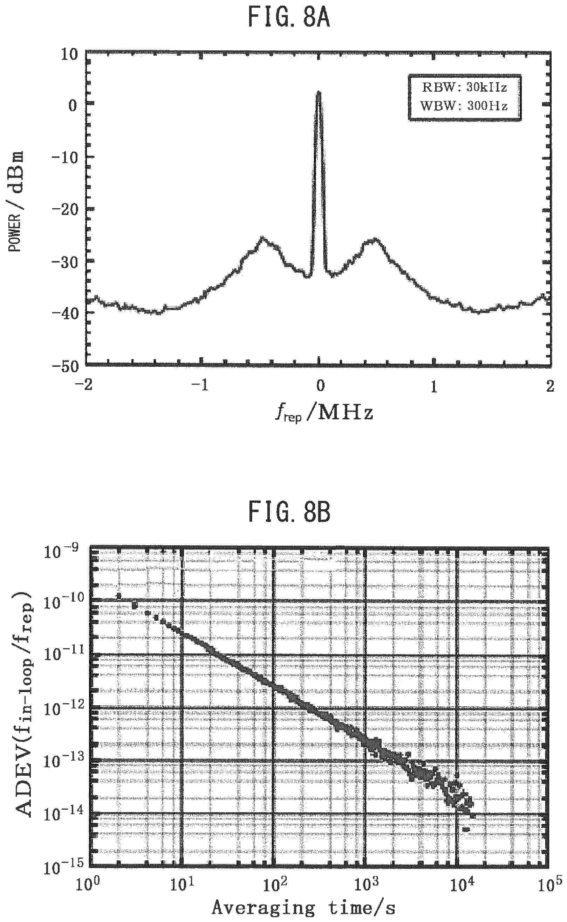

Next, experiment results for the present embodiment will be described. FIG. 8A is a frequency spectrum chart of an output signal from the BPF 131 in the error signal detection unit 13 when the optical frequency comb generation device 10 of the present embodiment operates in such a way that the signal component b is phase-locked to the signal component d and at the same time, $(f_{rep} - f_{ceo}) = (f_{rep} + f_{ceo})$ holds. As illustrated in FIG. 8A, the output signal (an in-loop beat signal) from the BPF 131 exhibits the peak level at the repetition frequency $f_{rep}$. This strongly suggests that the offset frequency $f_{ceo}$ has been set to zero by phase locking (for which, explicit evidence will be described later). The S/N ratio of the coherent peak is approximately 84 dBHz, and it is similar to that in a typical case where the offset frequency $f_{ceo}$ is phase-locked to a reference signal of a synthesizer.

Furthermore, to examine an effect and stability of phase locking in the present embodiment, a frequency of the in-loop beat signal (frequency $f_{in\text{-}loop}$) of the phase-locked offset frequency $f_{ceo}$ and the repetition frequency $f_{rep}$ directly detected at another port were individually measured by a counter, and the relative Allan deviation of $f_{in\text{-}loop}/f_{rep}$ was calculated. When $f_{ceo} = 0$ holds, $f_{in\text{-}loop}$ coincides with $f_{rep}$. FIG. 8B is a chart illustrating a measurement result of the relative Allan deviation of $f_{in\text{-}loop}/f_{rep}$. The relative Allan deviation reaching the limit value of the counter is obtained, and in conjunction with the in-loop beat spectrum, it has been confirmed that the performance of the phase locking in the present embodiment is high and it is as high as that of typical phase locking of the offset frequency $f_{ceo}$.

Next, an application example of the optical frequency comb generation device of the present embodiment will be described. The application example described below is an example in which the optical frequency comb generation device of the present embodiment is employed as an optical frequency divider. Note, however, that the optical frequency comb generation device is useful, as described above, in many fields including optical frequency division or application of an attosecond light pulse for controlling a carrier-envelope phase and that applications of the optical frequency comb generation device are not limited to an optical frequency divider.

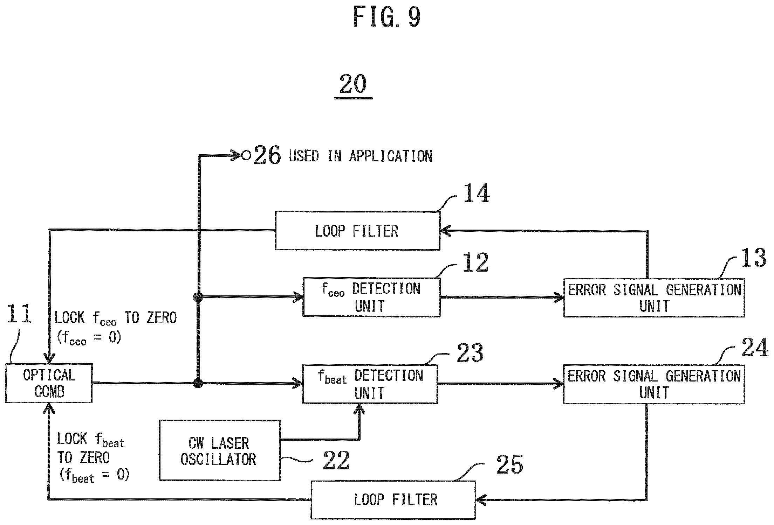

FIG. 9 is a block diagram of an application example of the optical frequency comb generation device according to the present invention. An optical frequency divider 20, which is the application example, configured by combining the optical frequency comb generation device 10 illustrated in FIG. 1 and an optical beat frequency zero control circuit that controls an optical beat frequency $f_{beat}$ to zero. In FIG. 9, the same reference signs denote the same components as those in FIG. 1, and a corresponding description will be omitted as appropriate.

In FIG. 9, the offset frequency $f_{ceo}$ of the optical frequency comb generated by the optical comb 11 is controlled to zero by means of a first feedback loop that includes the $f_{ceo}$ detection unit 12, the error signal generation unit 13, and the loop filter 14 and that a beat frequency $f_{beat}$, which represents a difference between an oscillation frequency $f_{cw}$ of a continuous-wave oscillating laser (CW laser) oscillator 22 and an optical frequency closest to the oscillation frequency $f_{cw}$ contained in the optical frequency comb output from the optical comb 11 is controlled to zero by means of a second feedback loop that includes an $f_{beat}$ detection unit 23, an error signal generation unit 24, and a loop filter 25. With this operation, the optical comb 11 generates an optical frequency comb f (N), the frequency of which is obtained by dividing the oscillation frequency $f_{cw}$ of the CW laser oscillator 22 and expressed as $(N/N_{cw})f_{cw}$. Note that N is any natural number and that $N_{cw}$ is a constant value according to a desired division ratio.

The optical frequency comb from the optical comb 11 and a CW laser signal from the CW laser oscillator 22 are supplied to the $f_{beat}$ detection unit 23. The $f_{beat}$ detection unit 23 performs photoelectric conversion on optical signals containing an interference signal obtained from interference between the optical frequency comb and the CW laser signal, and supplies, to the error signal detection unit 24, a signal composed of a component having a frequency corresponding to the beat frequency $f_{beat}$, components having frequencies $f_{rep}$, $2f_{rep}$, $3f_{rep}$,... that are m times (m is a natural number of one or greater) the repetition frequency $f_{rep}$, components having difference frequencies ($f_{rep} - f_{beat}$, $2f_{rep} - f_{beat}$, $3f_{rep} - f_{beat}$,...) between the frequencies $f_{rep}$, $2f_{rep}$, $3f_{rep}$,... and the beat frequency $f_{beat}$, and components having sum frequencies ($f_{rep} + f_{beat}$, $2f_{rep} + f_{beat}$, $3f_{rep} + f_{beat}$,...) between the frequencies $f_{rep}$, $2f_{rep}$, $3f_{rep}$,... and the beat frequency $f_{beat}$. The error signal detection unit 24 generates, from the signal supplied from the $f_{beat}$ detection unit 23, an error signal for phase-locking a component having the difference frequency ($f_{rep} - f_{beat}$) between the repetition frequency of the optical comb 11 and the beat frequency to a component having the sum frequency ($f_{rep} + f_{beat}$) between the repetition frequency and the beat frequency, and supplies the generated error signal to the optical comb 11 through the loop filter 25.

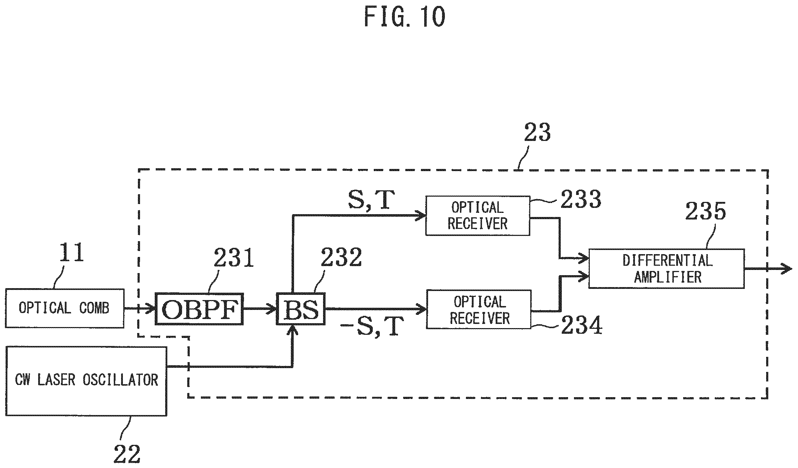

Next, configurations of respective blocks in FIG. 9 will be described in more detail. FIG. 10 is a block diagram of one embodiment of the $f_{beat}$ detection unit 23 in FIG. 9. As illustrated in FIG. 10, the $f_{beat}$ detection unit 23 includes an optical bandpass filter (OBPF) 231, a 1:1 beam splitter (BS) 232, optical receivers 233 and 234, and a differential amplifier 235. The 1:1 beam splitter (BS) 232 may be a half-silvered mirror. The OBPF 231 selects an optical signal within a narrow optical frequency range (e.g., $\pm$ several thousand times $f_{rep}$) centered at an optical signal having a frequency f ($N_{cw}$) closest to the oscillation frequency $f_{cw}$ of the CW laser signal among the optical signals contained in the optical frequency comb output from the optical comb 11, and outputs the optical signal.

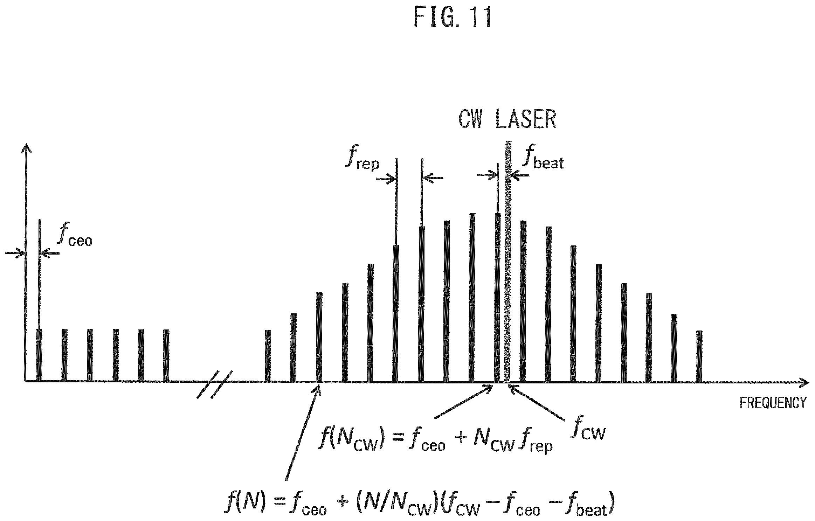

FIG. 11 illustrates a frequency spectrum of optical signals in the $f_{beat}$ detection unit 23. As illustrated in FIG. 11, a beat frequency $f_{beat}$ between the optical signal having the frequency f ($N_{cw}$) closest to the CW laser oscillation frequency $f_{cw}$ among the optical signals having the frequencies f (N) contained in the optical frequency comb output from the optical comb 11 and the CW laser oscillation frequency $f_{cw}$ is expressed by the following equation.

$$f_{beat} = f_{cw} - f(N_{cw}) = f_{cw} - (f_{ceo} + N_{cw}f_{rep}) \quad (8)$$

The equation (8) is rearranged to obtain the following equation, which expresses the repetition frequency $f_{rep}$.

$$f_{rep} = (f_{cw} - f_{ceo} - f_{beat})/N_{cw} \quad (9)$$

Therefore, by substituting the equation (9) into the equation (1), the frequency f(N) in the optical frequency comb is expressed by the following equation.

$$F(N) = f_{ceo} + (N/N_{cw})(f_{cw} - f_{ceo} - f_{beat}) \quad (10)$$

The 1:1 beam splitter (BS) 232 in FIG. 10 combines the optical signals within the narrow optical frequency range centered at the frequency f ($N_{cw}$) of the optical signals from the OBPF 231 with the CW laser signal from the CW laser oscillator 22, and splits the resultant signal into two, to output the split signals. An optical signal containing beat signals S and T is output to one optical path while an optical signal containing beat signals (-S) and T is output to the other optical path. The beat signal (-S) is a phase-inverted signal of the beat signal S.

The optical receiver 233 performs photoelectric conversion on the optical signal containing the beat signals S and T, and outputs a signal composed of components corresponding to the beat signal S having frequencies $f_{beat}$, ($f_{rep} - f_{beat}$), ($f_{rep} + f_{beat}$), ($2f_{rep} - f_{beat}$),... and components corresponding to the beat signal T having frequencies $f_{rep}$, $2f_{rep}$, $3f_{rep}$,... the values of which are natural number multiples of the repetition frequency. The output signal is input to the differential amplifier 235 as a first signal. In contrast, the optical receiver 234 performs photoelectric conversion on the optical signal containing the beat signals (-S) and T, and outputs a signal composed of components corresponding to the beat signal (-S) having frequencies $f_{beat}$, ($f_{rep} - f_{beat}$), ($f_{rep} + f_{beat}$), ($2f_{rep} - f_{beat}$),... and components corresponding to the beat signal T having frequencies $f_{rep}$, $2f_{rep}$, $3f_{rep}$,... the values of which are natural number multiples of the repetition frequency. The output signal is input to the differential amplifier 235 as a second signal. Note that each of the optical receiver 233 and the optical receiver 234 may be, for example, a photodiode.

The differential amplifier 235 amplifies difference between the aforementioned first and second signals, substantially suppresses frequencies $f_{rep}$, $2f_{rep\ o}$, $3f_{rep}$,... that are m times the repetition frequency, and outputs an electric signal for components having frequencies $f_{beat}$, ($f_{rep} - f_{beat}$), ($f_{rep} + f_{beat}$), ($2f_{rep} - f_{beat}$),... to the error signal generation unit 24. The error signal generation unit 24 includes a bandpass filter, a squaring circuit, and an adder, and first selects, by means of the bandpass filter, a signal containing a frequency band, which contains a frequency range ($f_{rep} - f_{beat}$) to ($f_{rep} + f_{beat}$) in the electric signal supplied from the differential amplifier 235 and which is slightly wider than the frequency range. Note that, since the repetition frequency $f_{rep}$ signals in the frequency range are substantially suppressed, the signal output from the bandpass filter is practically composed of a signal having a frequency ($f_{rep}$ - $f_{beat}$) and a signal having a frequency ($f_{rep}$ + $f_{beat}$). The squaring circuit outputs, from the signal having the frequency ($f_{rep}$ - $f_{beat}$) and the signal having the frequency ($f_{rep}$ + $f_{beat}$) supplied from the bandpass filter, a squared signal U as expressed by the following equation.

$$U = \{V\cos[2\pi(f_{rep} - f_{beat})t] + V\cos[2\pi(f_{rep} + f_{beat})t + \Delta\varphi]\}^2 \quad (11)$$

Note that, in the equation above, $\Delta\varphi$ represents a phase difference between the signal having the frequency ($f_{rep}$ - $f_{beat}$) and the signal having the frequency ($f_{rep}$ + $f_{beat}$).

The adder in the error detection unit 24 adds the predetermined DC voltage (-V²) to the squared signal U to generate an error signal, and supplies the error signal to the optical comb 11. On the basis of the error signal, the optical comb 11 controls an electrooptical modulator in a laser resonator inside the optical comb 11 or an actuator for controlling the $f_{beat}$ such as a piezoelectric device in such a way that the optical frequencies ($f_{rep}$ - $f_{beat}$) and ($f_{rep}$ + $f_{beat}$) contained in the frequency comb to be output from the optical comb 11 get closer, and phase-locks the signal having the frequency ($f_{rep}$ - $f_{beat}$) to the signal having the frequency ($f_{rep}$ + $f_{beat}$). Consequently, by phase-locking those signals, ($f_{rep}$ - $f_{beat}$) = ($f_{rep}$ + $f_{beat}$) will hold. As a result, the squared signal U in the equation (11) will be as expressed by the following equation.

$$U = V^2 + V^2\cos\Delta\varphi + (\text{higher frequency components unrelated to phase locking}) \quad (12)$$

After the higher frequency components unrelated to phase locking in the equation (12) are cut off from the squared signal U by means of a low-pass filter not illustrated, the adder in the error detection unit 24 adds the aforementioned predetermined DC voltage (-V²) to the squared signal U after the cutoff to generate an error signal having a waveform similar to that expressed as V²cos$\Delta\varphi$ illustrated in FIG. 4C, and outputs the generated error signal to the optical comb 11 through the loop filter 25. With this operation, the optical comb 11 generates an optical frequency comb whose beat frequency $f_{beat}$ is controlled to zero and outputs the optical frequency comb to the output terminal 26 in FIG. 9.

In this manner, the optical frequency divider 20 is controlled in such a way that the offset frequency $f_{ceo}$ of the optical frequency comb is controlled to zero by means of the first feedback loop that includes the $f_{ceo}$ detection unit 12, the error signal generation unit 13, and the loop filter 14 and in such a way that the beat frequency $f_{beat}$ is controlled to zero by means of the second feedback loop that includes the $f_{beat}$ detection unit 23, the error signal generation unit 24, and the loop filter 25. With this operation, the optical frequency divider 20 causes the optical comb 11 to generate an optical frequency comb f (N) whose frequency is divided into ($N/N_{cw}$)$f_{cw}$, which is obtained by substituting $f_{ceo}$ = $f_{beat}$ = 0 into the equation (10). The optical frequency divider 20 generates a divided optical frequency comb; therefore, the optical frequency divider 20 is an application example of the frequency comb generation device.

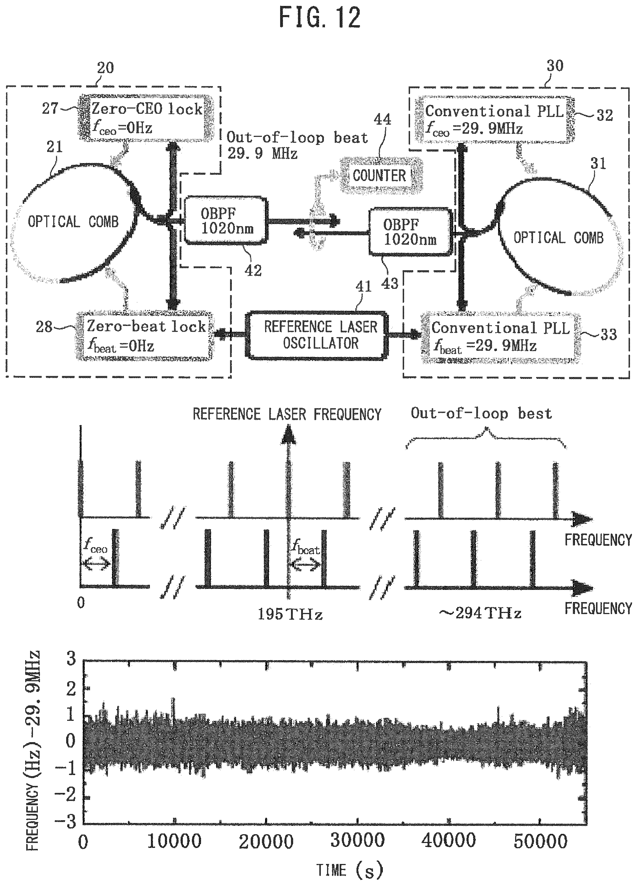

Next will be described a method for confirming whether ($f_{rep}$ - $f_{ceo}$) = ($f_{rep}$ + $f_{ceo}$) holds and consequently, the offset frequency $f_{ceo}$ = 0 holds when the optical frequency comb generation device 10 of the present embodiment operates in a state in which the signal component b is phase-locked to the signal component d. In the optical frequency comb generation device 10 of the present embodiment, it is found that ($f_{rep}$ - $f_{ceo}$) = ($f_{rep}$ + $f_{ceo}$) holds from the frequency spectrum chart of the output signal from the BPF 131 in the error signal detection unit 13, which is illustrated in FIG. 8A; however, just to make sure, it has been confirmed, using a device having a configuration as illustrated at the top in FIG. 12, that the offset frequency $f_{ceo}$ = 0 holds.

In FIG. 12, the same reference signs denote the same components as those in FIG. 9. In FIG. 12, the optical frequency divider 20 controls an offset frequency $f_{ceo}$ of an optical comb 21 in such a way that the offset frequency $f_{ceo}$ is zero by means of a first feedback loop circuit 27 that includes the $f_{ceo}$ detection unit 12, the error signal generation unit 13, and the loop filter 14, which have been described above, and controls a beat frequency $f_{beat}$ between a reference laser frequency of a reference laser oscillator 41 for the optical comb 21 and an optical signal contained in the optical frequency comb having a frequency closest to the reference laser frequency in such a way that the beat frequency $f_{beat}$ is zero by means of a second feedback loop circuit 28 that includes the $f_{beat}$ detection unit 23, the error signal generation unit 24, and the loop filter 25, which have been described above. In contrast, an optical frequency divider 30 with an offset frequency locks an offset frequency of an optical comb 31 to 29.9 MHz by means of a known first phase-locked loop (PLL) circuit 32 and controls a beat frequency between the reference laser frequency of the reference laser oscillator 41 for the optical comb 31 and an optical signal contained in the optical frequency comb having a frequency closest to the reference laser frequency in such a way that the beat frequency is 29.9 MHz by means of a known second PLL circuit 33.

In addition, among the optical signals from the optical comb 21, optical signals having a wavelength of 1020 nm and wavelengths in the adjacent wavelength bands are selected by means of an optical bandpass filter (OBPF) 42.

In contrast, among the optical signals from the optical comb 31, optical signals having a wavelength of 1020 nm and wavelengths in the adjacent wavelength bands are selected by means of an OBPF 43. Note that the repetition frequencies $f_{rep}$ of the respective frequency combs output from the optical combs 21 and 31 are set to an equal value. Frequencies of out-of-loop beat signals of the two signals respectively selected by the OBPFs 42 and 43 are counted with a counter 44.

The second graph from the top in FIG. 12 illustrates a frequency spectrum of the optical signals from the optical comb 21 while the third graph from the top in FIG. 12 illustrates a frequency spectrum of the optical signals from the optical comb 31. The waveform illustrated at the bottom in FIG. 12 illustrates the measured out-of-loop beat frequency and the relative Allan deviation at an optical frequency of 200 THz. It shows that the out-of-loop beat frequency is kept constant at 29.9 MHz and the offset frequency $f_{ceo}$ of the optical comb 21 is certainly locked to zero, i.e., $f_{ceo} = 0$.

REFERENCE SIGNS LIST

10 optical frequency comb generation device
11, 31 optical frequency comb generator (optical comb)
12, 12A, 12B offset frequency $f_{ceo}$ detection unit
13, 24 error signal generation unit
14, 25 loop filter
15, 26 output terminal
20 optical frequency divider
30 optical frequency divider with an offset frequency
22 continuous-wave oscillating laser (CW laser) oscillator
23 beat frequency $f_{beat}$ detection unit
121, 121a non-linear crystal
122, 232 beam splitter
123 variable optical attenuator
42, 43, 124, 231 optical bandpass filter (OBPF)
125, 126, 233, 234 optical receiver
127, 235 differential amplifier
128 polarizing beam splitter
129 variable optical attenuator or polarizer
131 bandpass filter (BPF)
132 splitter
133 mixer
134 adder

## Claims

1. An optical frequency comb generation device comprising:

   an optical frequency comb generator (11) that generates an optical frequency comb, which is a pulse laser beam represented by an aggregate of multiple spectral lines whose frequencies have an offset defined by an offset frequency $f_{ceo}$ and that are arranged at a frequency spacing of a repetition frequency $f_{rep}$ in a comb-like fashion;
   a detection unit (12,12A,12B) that generates, from the optical frequency comb output from the optical frequency comb generator (11), a detection signal indicating the offset frequency $f_{ceo}$ to output the detection signal; and
   **characterized in**
   an error signal detection unit (13) that generates, from the detection signal, an error signal for phase-locking a component having a frequency ($f_{rep} - f_{ceo}$) to a component having a frequency ($f_{rep} + f_{ceo}$) and feeds back the error signal to the optical frequency comb generator (11) to variably control the offset frequency $f_{ceo}$ contained in the optical frequency comb output from the optical frequency comb generator (11) to zero.

2. The optical frequency comb generation device according to claim 1, wherein the error signal detection unit (13) generates, from the detection signal, the error signal depending on a phase difference between a first error signal component having the frequency ($f_{rep} - f_{ceo}$) and a second error signal component having the frequency ($f_{rep} + f_{ceo}$), in which a power of the repetition frequency $f_{rep}$ is relatively reduced than powers of the component having the

frequency ($f_{rep}$ - $f_{ceo}$) and the component having the frequency ($f_{rep}$ + $f_{ceo}$), and the error signal detection unit variably controls the offset frequency $f_{ceo}$ of the optical frequency comb generator (11) to phase-lock the first error signal component to the second error signal component.

3.  The optical frequency comb generation device according to claim 1 or 2, wherein the detection unit (12,12A) comprises:

    interference processing means (121) that generates an interference optical signal by causing interference between the supplied optical frequency comb and second harmonics of the optical frequency comb;
    light splitting means (122, 128) that splits the interference optical signal into two and outputs the split signals to two optical paths;
    first signal detecting means (124, 129,125) that selects, from optical signals output to one optical path of the two optical paths in the interference optical signal, optical signals in a predetermined optical frequency range to perform photoelectric conversion on the selected optical signals to detect a first signal composed of components having frequencies of a first frequency group that are m times (m is a natural number of one or greater) the repetition frequency $f_{rep}$ and components having frequencies of a second frequency group composed of sum frequencies between the frequencies that are m times the repetition frequency f rep and the offset frequency $f_{ceo}$, difference frequencies between the frequencies that are m times the repetition frequency $f_{rep}$ and the offset frequency $f_{ceo}$, and the offset frequency $f_{ceo}$;
    second signal detecting means (123, 125) that detects a second signal composed of the components that have the frequencies of the first frequency group and are obtained by controlling powers of optical signals output to the other optical path of the two optical paths in the interference optical signal without selecting the optical signals in the predetermined optical frequency range; and
    differential amplification means (127) that amplifies difference between the first signal and the second signal and outputs, as the detection signal, a signal in which the components having the frequencies of the first frequency group are canceled out and that contains only the components having the frequencies of the second frequency group.

4.  The optical frequency comb generation device according to claim 1 or 2, wherein the detection unit (12B) comprises:

    light splitting means (122) that splits the supplied optical frequency comb into two and outputs the split optical frequency combs to two optical paths;
    interference processing means (121a, 124) that generates an interference optical signal by causing interference between the supplied optical frequency comb output to one optical path of the two optical paths and second harmonics of the optical frequency comb;
    first signal detecting means (126) that selects, from the interference optical signal, optical signals in a predetermined optical frequency range to perform photoelectric conversion on the selected optical signals and that detects a first signal composed of components having frequencies of a first frequency group that are m times (m is a natural number of one or greater) the repetition frequency $f_{rep}$ and components having frequencies of a second frequency group composed of sum frequencies between the frequencies that are m times the repetition frequency $f_{rep}$ and the offset frequency $f_{ceo}$, difference frequencies between the frequencies that are m times the repetition frequency $f_{rep}$ and the offset frequency $f_{ceo}$, and the offset frequency $f_{ceo}$;
    second signal detecting means (123, 125) that detects a second signal which has the frequencies of the first frequency group and is obtained by controlling powers of the optical frequency comb output to the other optical path of the two optical paths without selecting the optical signals in the predetermined optical frequency range; and
    differential amplification means (127) that amplifies difference between the first signal and the second signal and outputs, as the detection signal, a signal in which components having the frequencies of the first frequency group are canceled out and that contains only the components having the frequencies of the second frequency group.

5.  The optical frequency comb generation device according to any one of claims 1 to 4, wherein the error signal detection unit (13) comprises:

    frequency selection means (131) to which the detection signal composed of the components having frequencies of the first frequency group that are m times (m is a natural number of one or greater) the repetition frequency $f_{rep}$ and
    components having sum frequencies between the frequencies that are m times the repetition frequency $f_{rep}$

and the offset frequency $f_{ceo}$, difference frequencies between the frequencies that are m times the repetition frequency $f_{rep}$ and the offset frequency $f_{ceo}$, and the offset frequency $f_{ceo}$ and that selects the component having the frequency ($f_{rep} - f_{ceo}$) and the component having the frequency ($f_{rep} + f_{ceo}$) in the detection signal;

squaring means (132, 133) that squares a signal composed of the component having the frequency ($f_{rep} - f_{ceo}$) and the component having the frequency ($f_{rep} + f_{ceo}$) selected by the frequency selection means (131), and outputs a squared signal depending on a phase difference between the component having the frequency ($f_{rep} - f_{ceo}$) and the component having the frequency ($f_{rep} + f_{ceo}$); and

adding means (134) that adds a predetermined DC voltage to the squared signal output from the squaring means and outputs the signal obtained after addition as the error signal.

6. A frequency comb generation device comprising:

the optical frequency comb generation device (10) according to any one of claims 1 to 5;

laser oscillating means that oscillates and outputs a continuous-wave laser;

a second detection unit (23) that generates a second detection signal indicating a beat frequency $f_{beat}$, which represents a difference between a laser frequency $f_{cw}$ of the continuous-wave laser and an optical frequency closest to the laser frequency contained in the optical frequency comb output from the optical frequency comb generator (11) to output the second detection signal; and

a second error signal detection unit (24) that generates, from the second detection signal, an error signal for phase-locking a component having a frequency ($f_{rep} - f_{beat}$) to a component having a frequency ($f_{rep} + f_{beat}$) and feeds back the error signal to the optical frequency comb generator to variably control the beat frequency $f_{beat}$ contained in the optical frequency comb output from the optical frequency comb generator (11) to zero,

wherein the frequency comb generation device causes the optical frequency comb generator (11) to generate an optical frequency comb whose frequency is divided into $(N/N_{cw})f_{cw}$ (where N may be any natural number and $N_{cw}$ is a desired constant value).

## Patentansprüche

1. Vorrichtung zur Erzeugung eines optischen Frequenzkamms, umfassend:

einen optischen Frequenzkammgenerator (11), der einen optischen Frequenzkamm erzeugt, der ein Impulslaserstrahl ist, der durch ein Aggregat aus mehreren Spektrallinien dargestellt wird, deren Frequenzen einen Versatz aufweisen, der durch eine Versatzfrequenz $f_{ceo}$ definiert ist, und die in einem Frequenzabstand einer Wiederholungsfrequenz $f_{rep}$ in einer kammartigen Weise angeordnet sind;

eine Erfassungseinheit (12, 12A, 12B), die aus dem optischen Frequenzkamm, der von dem optischen Frequenzkammgenerator (11) ausgegeben wird, ein Erfassungssignal erzeugt, das die Versatzfrequenz $f_{ceo}$ anzeigt, um das Erfassungssignal auszugeben; und **gekennzeichnet ist durch**

eine Fehlersignalerfassungseinheit (13), die aus dem Erfassungssignal ein Fehlersignal zur Phasenregelung einer Komponente mit einer Frequenz ($f_{rep} - f_{phase}$) zu einer Komponente mit einer Frequenz ($f_{rep} + f_{ceo}$) erzeugt und das Fehlersignal an den optischen Frequenzkammgenerator (11) zurückführt, um die in dem optischen Frequenzkammausgang des optischen Frequenzkammgenerators (11) enthaltene Offsetfrequenz $f_{ceo}$ variabel auf Null zu steuern.

2. Optische Frequenzkamm-Erzeugungsvorrichtung nach Anspruch 1, wobei die Fehlersignal-Erfassungseinheit (13) aus dem Erfassungssignal das Fehlersignal in Abhängigkeit von einer Phasendifferenz zwischen einer ersten Fehlersignal-Komponente mit der Frequenz ($f_{rep} - f_{ceo}$) und einer zweiten Fehlersignal-Komponente mit der Frequenz ($f_{rep} + f_{ceo}$) erzeugt, wobei eine Leistung der Wiederholungsfrequenz $f_{rep}$ relativ geringer ist als eine Leistungen der Komponente mit der Frequenz ($f_{rep} - f_{ceo}$) und der Komponente mit der Frequenz ($f_{rep} + f_{ceo}$), und die Fehlersignalerfassungseinheit die Offsetfrequenz $f_{ceo}$ des optischen Frequenzkammgenerators (11) variabel steuert, um die erste Fehlersignalkomponente phasenstarr zu der zweiten Fehlersignalkomponente zu machen.

3. Optische Frequenzkamm-Erzeugungsvorrichtung nach Anspruch 1 oder 2, wobei die Erfassungseinheit (12, 12A) Folgendes umfasst:

eine Interferenzverarbeitungseinrichtung (121), die ein optisches Interferenzsignal erzeugt, indem sie eine Interferenz zwischen dem zugeführten optischen Frequenzkamm und der zweiten Harmonischen des optischen Frequenzkamms verursacht;

eine Lichtteilereinrichtung (122, 128), die das optische Interferenzsignal in zwei Teile aufteilt und die geteilten Signale an zwei optische Pfade ausgibt;

eine erste Signalerfassungseinrichtung (124, 129, 125), die aus optischen Signalen, die an einen optischen Pfad der beiden optischen Pfade in dem optischen Interferenzsignal ausgegeben werden, optische Signale in einem vorbestimmten optischen Frequenzbereich auswählt, optische Signale in einem vorbestimmten optischen Frequenzbereich auswählt, um eine photoelektrische Umwandlung an den ausgewählten optischen Signalen durchzuführen, um ein erstes Signal zu erfassen, das aus Komponenten mit Frequenzen einer ersten Frequenzgruppe, die das m-fache (m ist eine natürliche Zahl von eins oder größer) der Wiederholungsfrequenz $f_{rep}$ sind, und aus Komponenten mit Frequenzen einer zweiten Frequenzgruppe zusammengesetzt ist, die aus Summenfrequenzen zwischen den Frequenzen, die das m-fache der Wiederholungsfrequenz $f_{rep}$ und der Versatzfrequenz $f_{ceo}$ sind, Differenzfrequenzen zwischen den Frequenzen, die das m-fache der Wiederholungsfrequenz $f_{rep}$ und der Versatzfrequenz $f_{ceo}$ sind, und der Versatzfrequenz $f_{ceo}$ zusammengesetzt ist;

eine zweite Signalerfassungseinrichtung (123, 125), die ein zweites Signal detektiert, das aus den Komponenten zusammengesetzt ist, die die Frequenzen der ersten Frequenzgruppe aufweisen und durch Steuern von Leistungen von optischen Signalen erhalten werden, die an den anderen optischen Pfad der zwei optischen Pfade in dem optischen Interferenzsignal ausgegeben werden, ohne die optischen Signale in dem vorbestimmten optischen Frequenzbereich auszuwählen; und

eine Differenzverstärkungseinrichtung (127), die die Differenz zwischen dem ersten Signal und dem zweiten Signal verstärkt und als das Erfassungssignal ein Signal ausgibt, in dem die Komponenten mit den Frequenzen der ersten Frequenzgruppe ausgelöscht sind und das nur die Komponenten mit den Frequenzen der zweiten Frequenzgruppe enthält.

4.  Optische Frequenzkamm-Erzeugungsvorrichtung nach Anspruch 1 oder 2, wobei die Erfassungseinheit (12B) umfasst:

eine Lichtteilereinrichtung (122), die den zugeführten optischen Frequenzkamm in zwei Teile teilt und die geteilten optischen Frequenzkämme an zwei optische Pfade ausgibt;

eine Interferenzverarbeitungseinrichtung (121a, 124), die ein optisches Interferenzsignal erzeugt, indem sie eine Interferenz zwischen dem zugeführten optischen Frequenzkamm, der an einen optischen Pfad der zwei optischen Pfade ausgegeben wird, und zweiten Harmonischen des optischen Frequenzkamms verursacht;

eine erste Signalerfassungseinrichtung (126), die aus dem optischen Interferenzsignal optische Signale in einem vorbestimmten optischen Frequenzbereich auswählt, um an den ausgewählten optischen Signalen eine photoelektrische Umwandlung durchzuführen, und die ein erstes Signal detektiert, das aus Komponenten mit Frequenzen einer ersten Frequenzgruppe, die das m-fache (m ist eine natürliche Zahl von eins oder größer) der Wiederholungsfrequenz $f_{rep}$ sind, und aus Komponenten mit Frequenzen einer zweiten Frequenzgruppe besteht, die aus Summenfrequenzen zwischen den Frequenzen, die das m-fache der Wiederholungsfrequenz $f_{rep}$ sind, und der Offsetfrequenz $f_{ceo}$ besteht Differenzfrequenzen zwischen den Frequenzen, die das m-fache der Wiederholungsfrequenz $f_{rep}$ und der Offsetfrequenz $f_{ceo}$ betragen, und der Offsetfrequenz $f_{ceo}$;

eine zweite Signalerfassungseinrichtung (123, 125), die ein zweites Signal detektiert, das die Frequenzen der ersten Frequenzgruppe aufweist und durch Steuern von Leistungen des optischen Frequenzkammausgangs zu dem anderen optischen Pfad der zwei optischen Pfade erhalten wird, ohne die optischen Signale in dem vorbestimmten optischen Frequenzbereich auszuwählen; und

eine Differenzverstärkungseinrichtung (127), die die Differenz zwischen dem ersten Signal und dem zweiten Signal verstärkt und als das Erfassungssignal ein Signal ausgibt, in dem die Komponenten mit den Frequenzen der ersten Frequenzgruppe ausgelöscht sind und das nur die Komponenten mit den Frequenzen der zweiten Frequenzgruppe enthält.

5.  Optische Frequenzkamm-Erzeugungsvorrichtung nach einem der Ansprüche 1 bis 4, wobei die Fehlersignal-Erfassungseinheit (13) umfasst:

Frequenzauswahlmittel (131), denen das Erfassungssignal zugeführt wird, das aus den Komponenten mit Frequenzen der ersten Frequenzgruppe, die das m-fache (m ist eine natürliche Zahl von eins oder größer) der Wiederholungsfrequenz $f_{rep}$ sind, und Komponenten mit Summenfrequenzen zwischen den Frequenzen, die das m-fache der Wiederholungsfrequenz $f_{rep}$ sind, und der Offsetfrequenz $f_{ceo}$ besteht, Differenzfrequenzen zwischen den Frequenzen, die das m-fache der Wiederholungsfrequenz $f_{rep}$ und der Offsetfrequenz $f_{ceo}$ sind, und der Offsetfrequenz $f_{ceo}$, und das die Komponente mit der Frequenz ($f_{rep} - f_{ceo}$) und die Komponente mit der Frequenz ($f_{rep} + f_{ceo}$) im Erfassungssignal auswählt;

eine Quadriereinrichtung (132, 133), die ein Signal quadriert, das aus der Komponente mit der Frequenz ($f_{rep}$

- f$_{ceo}$) und der Komponente mit der Frequenz (f$_{rep}$ + f$_{ceo}$) besteht, die von der Frequenzauswahleinrichtung (131) ausgewählt wurde, und die ein quadriertes Signal in Abhängigkeit von einer Phasendifferenz zwischen der Komponente mit der Frequenz (f$_{rep}$ - f$_{ceo}$) und der Komponente mit der Frequenz (f$_{rep}$ + f$_{ceo}$) ausgibt; und eine Addiereinrichtung (134), die eine vorbestimmte Gleichspannung zu dem von der Quadriereinrichtung ausgegebenen quadrierten Signal addiert und das nach der Addition erhaltene Signal als das Fehlersignal ausgibt.

6. Vorrichtung zur Erzeugung eines Frequenzkamms, umfassend:

   die optische Frequenzkamm-Erzeugungsvorrichtung (10) nach einem der Ansprüche 1 bis 5;
   eine Laseroszillatoreinrichtung, die einen Dauerstrichlaser oszilliert und ausgibt;
   eine zweite Erfassungseinheit (23), die ein zweites Erfassungssignal erzeugt, das eine Schwebungsfrequenz f$_{beat}$ anzeigt, die eine Differenz zwischen einer Laserfrequenz f$_{cw}$ des Dauerstrichlasers und einer optischen Frequenz darstellt, die der Laserfrequenz am nächsten liegt, die in dem optischen Frequenzkamm enthalten ist, der von dem optischen Frequenzkammgenerator (11) ausgegeben wird, um das zweite Erfassungssignal auszugeben; und
   eine zweite Fehlersignalerfassungseinheit (24), die aus dem zweiten Erfassungssignal ein Fehlersignal zum Phasenverriegeln einer Komponente mit einer Frequenz (f$_{rep}$ - f$_{beat}$) mit einer Komponente mit einer Frequenz (f$_{rep}$ + f$_{beat}$) erzeugt und das Fehlersignal an den optischen Frequenzkammgenerator zurückführt, um die in dem optischen Frequenzkammausgang des optischen Frequenzkammgenerators (11) enthaltene Schwebungsfrequenz f$_{beat}$ variabel auf Null zu steuern,
   wobei die Frequenzkamm-Erzeugungsvorrichtung den optischen FrequenzkammGenerator (11) veranlasst, einen optischen Frequenzkamm zu erzeugen, dessen Frequenz in (N/N$_{cw}$)f$_{cw}$ geteilt ist (wobei N eine beliebige natürliche Zahl sein kann und N$_{cw}$ ein gewünschter konstanter Wert ist).

## Revendications

1. Dispositif de génération de peigne de fréquences optiques comprenant :

   un générateur de peigne de fréquences optiques (11) qui génère un peigne de fréquences optiques, qui est un faisceau laser pulsé représenté par un agrégat de multiples lignes spectrales dont les fréquences ont un décalage défini par une fréquence de décalage f$_{ceo}$ et qui sont disposées selon un espacement de fréquence d'une fréquence de répétition f$_{rep}$ d'une manière en forme de peigne ;
   une unité de détection (12, 12A, 12B) qui génère, à partir du peigne de fréquences optiques délivré en sortie par le générateur de peigne de fréquences optiques (11), un signal de détection indiquant la fréquence de décalage f$_{ceo}$ pour délivrer en sortie le signal de détection ; et
   **caractérisé par**
   une unité de détection de signal d'erreur (13) qui génère, à partir du signal de détection, un signal d'erreur pour verrouiller en phase une composante ayant une fréquence (f$_{rep}$ - f$_{ceo}$) sur une composante ayant une fréquence (f$_{rep}$ + f$_{ceo}$) et renvoie le signal d'erreur vers le générateur de peigne de fréquences optiques (11) pour commander de manière variable la fréquence de décalage f$_{ceo}$ contenue dans le peigne de fréquences optiques délivré en sortie par le générateur de peigne de fréquences optiques (11) à zéro.

2. Dispositif de génération de peigne de fréquences optiques selon la revendication 1, dans lequel l'unité de détection de signal d'erreur (13) génère, à partir du signal de détection, le signal d'erreur en fonction d'une différence de phase entre une première composante de signal d'erreur ayant la fréquence (f$_{rep}$ - f$_{ceo}$) et une seconde composante de signal d'erreur ayant la fréquence (f$_{rep}$ + f$_{ceo}$), dans lequel une puissance de la fréquence de répétition f$_{rep}$ est relativement réduite par rapport à des puissances de la composante ayant la fréquence (f$_{rep}$ - f$_{ceo}$) et de la composante ayant la fréquence (f$_{rep}$ + f$_{ceo}$), et l'unité de détection de signal d'erreur commande de manière variable la fréquence de décalage f$_{ceo}$ du générateur de peigne de fréquences optiques (11) pour verrouiller en phase la première composante de signal d'erreur sur la seconde composante de signal d'erreur.

3. Dispositif de génération de peigne de fréquences optiques selon la revendication 1 ou 2, dans lequel l'unité de détection (12, 12A) comprend :

   des moyens de traitement d'interférence (121) qui génèrent un signal optique d'interférence en provoquant une interférence entre le peigne de fréquences optiques fourni et des seconds harmoniques du peigne de fréquences optiques ;

des moyens de division de lumière (122, 128) qui divisent le signal optique d'interférence en deux et délivrent en sortie les signaux divisés vers deux trajets optiques ;

des premiers moyens de détection de signal (124, 129, 125) qui sélectionnent, à partir de signaux optiques délivrés en sortie vers un trajet optique parmi les deux trajets optiques dans le signal optique d'interférence, des signaux optiques dans une plage de fréquence optique prédéterminée pour effectuer une conversion photoélectrique sur les signaux optiques sélectionnés pour détecter un premier signal composé de composantes ayant des fréquences d'un premier groupe de fréquences qui sont m fois (m est un nombre naturel égal ou supérieur à un) la fréquence de répétition $f_{rep}$ et de composantes ayant des fréquences d'un second groupe de fréquences composé de fréquences somme entre les fréquences qui sont m fois la fréquence de répétition $f_{rep}$ et la fréquence de décalage $f_{ceo}$, de fréquences différence entre les fréquences qui sont m fois la fréquence de répétition $f_{rep}$ et la fréquence de décalage $f_{ceo}$, et de la fréquence de décalage $f_{ceo}$ ;

des seconds moyens de détection de signal (123, 125) qui détectent un second signal composé des composants qui ont les fréquences du premier groupe de fréquences et sont obtenues en commandant des puissances de signaux optiques délivrés en sortie vers l'autre trajet optique des deux trajets optiques dans le signal optique d'interférence sans sélectionner les signaux optiques dans la plage de fréquence optique prédéterminée ; et

des moyens d'amplification différentielle (127) qui amplifient une différence entre le premier signal et le second signal et délivrent en sortie, en tant que signal de détection, un signal dans lequel les composantes ayant les fréquences du premier groupe de fréquences sont annulées et qui contient uniquement les composantes ayant les fréquences du second groupe de fréquences.

4. Dispositif de génération de peigne de fréquences optiques selon la revendication 1 ou 2, dans lequel l'unité de détection (12B) comprend :

des moyens de division de lumière (122) qui divisent le peigne de fréquences optiques fourni en deux et délivrent en sortie les peignes de fréquences optiques divisés vers deux trajets optiques ;

des moyens de traitement d'interférence (121a, 124) qui génèrent un signal optique d'interférence en provoquant une interférence entre le peigne de fréquences optiques fourni délivré en sortie vers un trajet optique des deux trajets optiques et des seconds harmoniques du peigne de fréquences optiques ;

des premiers moyens de détection de signal (126) qui sélectionnent, à partir du signal optique d'interférence, des signaux optiques dans une plage de fréquence optique prédéterminée pour effectuer une conversion photoélectrique sur les signaux optiques sélectionnés et qui détectent un premier signal composé de composantes ayant des fréquences d'un premier groupe de fréquences qui sont m fois (m est un nombre naturel égal ou supérieur à un) la fréquence de répétition $f_{rep}$ et de composantes ayant des fréquences d'un second groupe de fréquences composé de fréquences somme entre les fréquences qui sont m fois la fréquence de répétition $f_{rep}$ et la fréquence de décalage $f_{ceo}$, de fréquences différence entre les fréquences qui sont m fois la fréquence de répétition $f_{rep}$ et la fréquence de décalage $f_{ceo}$, et de la fréquence de décalage $f_{ceo}$ ;

des seconds moyens de détection de signal (123, 125) qui détectent un second signal qui a les fréquences du premier groupe de fréquences et est obtenu en commandant des puissances du peigne de fréquences optiques délivré en sortie vers l'autre trajet optique des deux trajets optiques sans sélectionner les signaux optiques dans la plage de fréquence optique prédéterminée ; et

des moyens d'amplification différentielle (127) qui amplifient une différence entre le premier signal et le second signal et délivrent en sortie, en tant que signal de détection, un signal dans lequel des composantes ayant les fréquences du premier groupe de fréquences sont annulées et qui contient uniquement les composantes ayant les fréquences du second groupe de fréquences.

5. Dispositif de génération de peigne de fréquences optiques selon l'une quelconque des revendications 1 à 4, dans lequel l'unité de détection de signal d'erreur (13) comprend :

des moyens de sélection de fréquence (131) auquel le signal de détection composé des composantes ayant des fréquences du premier groupe de fréquences qui sont m fois (m est un nombre naturel égal ou supérieur à un) la fréquence de répétition $f_{rep}$ et de composantes ayant des fréquences somme entre les fréquences qui sont m fois la fréquence de répétition $f_{rep}$ et la fréquence de décalage $f_{ceo}$, des fréquences différence entre les fréquences qui sont m fois la fréquence de répétition $f_{rep}$ et la fréquence de décalage $f_{ceo}$, et la fréquence de décalage $f_{ceo}$ qui sélectionnent la composante ayant la fréquence $(f_{rep} - f_{ceo})$ et la composante ayant la fréquence $(f_{rep} + f_{ceo})$ dans le signal de détection ;

des moyens d'élévation au carré (132, 133) qui élèvent au carré un signal composé de la composante ayant la fréquence $(f_{rep} - f_{ceo})$ et de la composante ayant la fréquence $(f_{rep} + f_{ceo})$ sélectionnées par les moyens de sélection de fréquence (131), et délivrent en sortie un signal au carré en fonction d'une différence de phase entre la composante ayant la fréquence ($f_{rep}$ - $f_{ceo}$) et la composante ayant la fréquence ($f_{rep}$ + $f_{ceo}$) ; et des moyens d'addition (134) qui additionnent une tension DC prédéterminée au signal élevé au carré délivré en sortie par les moyens d'élévation au carré et délivrent en sortie le signal obtenu après addition en tant que signal d'erreur.

6. Dispositif de génération de peigne de fréquences comprenant :

le dispositif de génération de peigne de fréquences optiques (10) selon l'une quelconque des revendications 1 à 5 ;

des moyens d'oscillation laser qui oscillent et délivrent en sortie un laser à onde continue ;

une seconde unité de détection (23) qui génère un second signal de détection indiquant une fréquence de battement $f_{beat}$, qui représente une différence entre une fréquence laser $f_{cw}$ du laser à onde continue et une fréquence optique la plus proche de la fréquence laser contenue dans le peigne de fréquences optiques délivré en sortie par le générateur de peigne de fréquences optiques (11) pour délivrer en sortie le second signal de détection ; et

une seconde unité de détection de signal d'erreur (24) qui génère, à partir du second signal de détection, un signal d'erreur pour verrouiller en phase une composante ayant une fréquence ($f_{rep}$ - $f_{beat}$) sur une composante ayant une fréquence ($f_{rep}$ + $f_{beat}$) et

renvoie le signal d'erreur au générateur de peigne de fréquences optiques pour commander de manière variable la fréquence de battement $f_{beat}$ contenue dans le peigne de fréquences optiques délivré en sortie par le générateur de peigne de fréquences optiques (11) à zéro,

dans lequel le dispositif de génération de peigne de fréquences amène le générateur de peigne de fréquences optiques (11) à générer un peigne de fréquences optiques dont la fréquence est divisée en ($N/N_{cw}$)$f_{cw}$ (où N peut être tout nombre naturel et $N_{cw}$ est une valeur constante souhaitée).

# FIG. 1

<u>10</u>

15 ○ USED IN APPLICATION AS OPTICAL COMB HAVING $f_{ceo} = 0$

11 OPTICAL COMB

A

12 $f_{ceo}$ DETECTION UNIT

G

13 ERROR SIGNAL GENERATION UNIT

J

14 LOOP FILTER

ACTUATOR FOR $f_{ceo}$ CONTROL (e. g. CURRENT OF EXCITATION LASER)

## FIG. 2

EP 3 608 713 B1

# FIG. 3

<u>13</u>

G → **BPF** — **H** → | SPLITTER → MIXER | → **I** → **ADDER** → **J** → ERROR SIGNAL

131    132    133    134

DC VOLTAGE: $-V^2$

# FIG. 4A

G

a   b   d   e   g   h

c       f       i

FREQUENCY

$a: f_{beat}$       $f: 2f_{rep}$

$b: f_{rep} - f_{beat}$   $g: 2f_{rep} + f_{beat}$

$c: f_{rep}$       $h: 3f_{rep} - f_{beat}$

$d: f_{rep} + f_{beat}$   $i: 3f_{rep}$

$e: 2f_{rep} - f_{beat}$

# FIG. 4B

H

b   d

FREQUENCY

IGNORE SIGNAL COMPONENTS OTHER THAN B AND D,
LEVELS OF WHICH ARE SUFFICIENTLY LOW

FIG. 4C

$V^2 \cos \Delta \varphi$

## FIG. 5

(A) REDUCE POWER OF $f_{rep}$ BY MEANS OF DIFFERENTIAL DETECTION

(B) DECREASE $f_{ceo}$ AND MAKE $f_{rep} - f_{ceo}$ AND $f_{rep} + f_{ceo}$ CLOSER TO PERFORM PHASE LOCKING

$$(f_{rep} - f_{ceo} = f_{rep} + f_{ceo} \Rightarrow f_{ceo} = 0)$$

FIG. 6

EP 3 608 713 B1

FIG. 7

## FIG. 8A

## FIG. 8B

FIG. 9

<u>20</u>

EP 3 608 713 B1

FIG. 10

EP 3 608 713 B1

FIG. 11

CW LASER

$f_{beat}$

$f_{rep}$

$f_{ceo}$

$f_{CW}$

$f(N_{CW}) = f_{ceo} + N_{CW} f_{rep}$

$f(N) = f_{ceo} + (N/N_{CW})(f_{CW} - f_{ceo} - f_{beat})$

FREQUENCY

# FIG. 12

FIG. 13

EP 3 608 713 B1

$$f(N) = f_{ceo} + N f_{rep}$$

$$f(2N) = f_{ceo} + 2N f_{rep}$$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120093181
- US 2009097035 A1
- JP 2014013935 A
- JP 2014135341 A
- JP 2007256365 A

**Non-patent literature cited in the description**

- **RAUSCH et al.** *Opt.Express.,* 2009, vol. 17, 20282
- **PAPER, KRAUSS et al.** *Opt.Lett.,* 2011, vol. 36, 540
- **SHO OKUBO et al.** Novel phase-locking schemes for the carrier envelope offset frequency of an optical frequency comb. *Applied Physics Express,* 15 October 2015, vol. 8 (11), 112402, http://dx.doi.org/10.7567/APEX.8.112402